# EUROPÄISCHE PATENTSCHRIFT

(11) **EP 0 409 944 B1**
(45) Veröffentlichungstag und Bekanntmachung des Hinweises auf die Patenterteilung: **19.05.1993**
(21) Anmeldenummer: 90902209.7
(22) Anmeldetag: 06.02.1990
(51) Int. Cl.: B60S 1/04

(54) **WISCHERANLAGE**
WINDSCREEN WIPER SYSTEM
SYSTEME D'ESSUIE-GLACE

(30) Priorität: 10.02.1989 DE 3903976
(43) Veröffentlichungstag der Anmeldung: 30.01.1991
(73) Patentinhaber: SWF Auto-Electric GmbH, D-74307 Bietigheim-Bissingen (DE)
(72) Erfinder: AMANN, Eugen, D-7122 Besigheim 3 (DE); BAUMGARTEN, Peter, D-8633 Rödental-Mönchröden (DE); HEHL, Thomas, D-7120 Bietigheim-Bissingen (DE); SCHMID, Eckhardt, D-7129 Brackenheim (DE)
(74) Vertreter: Portwich, Peter
(86) Internationale Anmeldenummer: EP9000191
(87) Internationale Veröffentlichungsnummer: WO9009299

(56) Entgegenhaltungen:
- DE-A- 2 920 899
- DE-U- 7 434 119
- GB-A- 677 147
- GB-A- 2 218 622
- US-A- 2 670 492

## Beschreibung

Die Erfindung bezieht sich auf eine Wischeranlage gemäß den Merkmalen des Oberbegriffes des Anspruches 1.

Aus der gattungsbildenden DE-U-74 34 119 ist eine Wischeranlage mit einem als Vierkantrohr ausgebildeten Träger bekannt, an dessen Ende jeweils ein Wischerlager fixiert ist. An diesem Vierkantrohr ist eine als Motortragteil dienende Platte angeschweißt, an der der Antriebsmotor der Wischeranlage befestigt ist. Diese oft als Rohrrahmenanlage bezeichneten Wischeranlagen haben sich wegen ihrer leichten Bauweise bei großer Stabilität in den letzten Jahren durchgesetzt. Allerdings hat sich gezeigt, daß derartige Rohrrahmenanlagen gegenüber den anderen bekannten Systemen mit einem gegossenen Aluminiumrahmen dann Nachteile aufweisen können, wenn in einem Kraftfahrzeug beengte Einbauverhältnisse gegeben sind und daher dieses die Wischerlager verbindende Rohr mehrfach in unterschiedliche Ebenen abgewinkelt werden müßte. Dann wird der Biegeaufwand für dieses Rohr sehr groß und die Stabilität des Rahmens leidet darunter. Nachteilig bei dieser bekannten Anlage ist außerdem, daß durch den Schweißvorgang zwischen dem Motortragteil und dem rohrartigen Träger nicht unbeträchtliche Kosten anfallen, die sich natürlich im Preis der gesamten Wischeranlage niederschlagen. Ferner ist in der GB-A-677147 eine Wischeranlage offenbart, bei welcher der Motorträger über entsprechende Ansätze mit zwei Trägern formstabil mit Hilfe von Bolzenverbindungen verbunden ist. Diese Art von Verbindung hat jedoch zur Folge, daß sowohl die Ansätze als auch die Träger im gemeinsamen Verbindungsbereich zum einen großen Hebelkräften ausgesetzt sind und zum anderen eine Materialschwächung erfahren, die sich aufgrund von Bohrungen für die Bolzen ergibt.

Der Erfindung liegt daher die Aufgabe zugrunde, eine Wischeranlage der eingangs erwähnten Art mit einem rohrartigen Träger zu einem Wischerlager derart weiterzubilden, daß mit einfachen Mitteln eine ausreichende Stabilität auch bei schwierigen Einbauverhältnissen erreicht wird.

Die gestellte Aufgabe wird erfindungsgemäß durch die Merkmale des Anspruches 1 gelöst.

Die Erfindung basiert also auf der Überlegung, daß man beengten Raumverhältnissen besser gerecht werden kann, wenn man den rohrartigen Träger gewissermaßen in axialer Richtung am Motortragteil fixiert, also auf einen Ansatz aufsteckt. Bei einer herkömmlichen Wischeranlage mit zwei Wischerlagern bedeutet dieses also eine Trennung des bisher üblichen rohrartigen Trägers in zwei Teilstücke, die jeweils auf einen Ansatz am Motorträger aufgesteckt werden. Während bei den bisher bekannten Anlagen die beiden Wischerlager an den Enden eines einzigen Rohres fixiert werden und das Motortragteil gewissermaßen tangential an diesem Rohr fixiert wird, ist bei der erfindungsgemäßen Ausführung jeder rohrartige Träger einseitig am Motortragteil befestigt, so daß der gesamte Tragrahmen aus zwei Rohrstücken und dem Motortragteil selbst besteht.

Es wird bei dieser Gelegenheit bereits darauf hingewiesen, daß die vorliegende Erfindung aber nicht auf Wischeranlagen beschränkt ist, bei denen zwei Wischerlager an rohrartigen Trägern fixiert werden. Der Grundgedanke kann vielmehr auch mit Vorteil dann realisiert werden, wenn bespielsweise für Heckscheibenwischeranlagen an Kraftfahrzeugen - nur ein Wischerlager vorhanden ist, das axial in das eine Rohrende eingesteckt ist, wobei dann dieses Rohrende wiederum axial auf einen Ansatz an einem Motortragteil aufgesteckt und dort formstabil fixiert ist. Außerdem sind auch Ausführungen denkbar, bei denen nur ein Wischerlager an einem Rohr fixiert ist, während das zweite Wischerlager auf andere Weise am Kraftfahrzeug befestigt ist.

Die Stabilität einer solchen Wischeranlage kann wesentlich dadurch verbessert werden, daß man die Ansätze am Motortragteil so ausbildet, daß man gerade rohrartige Träger verwenden kann. Dies ist insbesondere dann verhältnismäßig einfach, wenn das Motortragteil gemäß einer besonders bevorzugten Weiterbildung der Erfindung als Druckgußteil aus Aluminium oder Zink hergestellt ist. Ein solches Druckgußteil kann nämlich ohne größere Kosten so geformt werden, daß selbst bei beengten Einbauverhältnissen eine Montage der Wischeranlage möglich ist. Dabei kann dieses als Druckgußteil hergestellte Motortragteil auch noch so ausgebildet werden, daß die Wischerlager und die Antriebsachse des Antriebsmotors möglichst auf einer geraden Linie liegen. Dies hat den Vorteil, daß keine Phasenverschiebung beim Wischvorgang der beiden Wischer zu beobachten ist. Bei Verwendung eines Druckgußteils kann man außerdem ohne Schwierigkeiten ein Befestigungselement, beispielsweise ein Befestigungsauge, vorsehen, über das dieses Motortragteil an der Karosserie des Kraftfahrzeugs befestigt werden kann.

Die Kosten für die Herstellung einer solchen Wischeranlage können erheblich reduziert werden, wenn man gemäß einer vorteilhaften Weiterbildung der Erfindung nun dieses Motortragteil einstückig mit einem zum Antriebsmotor gehörenden Teil ausbildet. Dieses Motortragteil kann dabei einstückig mit dem Getriebegehäuse ausgebildet sein, das bei den meisten Wischermotoren ohnehin aus Zinkdruckguß hergestellt ist. Das Motortragteil kann aber auch Teil des Getriebegehäusedeckels sein. Schließlich ist noch eine Ausführung denkbar, bei der das Getriebegehäuse aus zwei vorzugsweise gleich aufgebauten Hälften zusammengesetzt ist, wobei dann beide Getriebegehäusehälften Ansätze aufweisen, an denen die rohrartigen träger fixiert werden können. Damit werden die Einsatzmöglichkeiten eines solchen Motors mit einem integrierten Motorträgerteil beträchtlich erhöht.

Bei allen diesen Anlagen ist eine möglichst starke und formstabile Verbindung zwischen dem Antriebsmotor und den Wischerlagern gegeben, die an der Fahrzeugkarosserie befestigt werden. Bei solchen Anlagen werden also die Motorgeräusche über das Motortragteil, den rohrartigen Träger und die Wischerlager auf die Karosserie des Fahrzeugs übertragen, was von manchem Fahrer als störend empfunden wird. Zur Abhilfe wird der Einbau eines Geräuschdämpfungselements zwischen dem Antriebsmotor und dem Wischerlager vorgeschlagen. Dieses Geräuschdämpfungselement kann insbesondere in den rohrförmigen Träger dadurch integriert werden, daß man jeden rohrförmigen Träger nochmals in zwei Abschnitte aufteilt und diese beiden Trägerabschnitte dann über ein geräuschdämpfendes Element miteinander verbindet. In Einzelfällen kann auch die Geräuschübertragung dadurch vermindert werden, daß man den rohrförmigen Träger perforiert und/oder mit geräuschdämpfendem Material ausfüllt. Durch die Materialschwächung bzw. durch das geräuschdämpfende Material kann man die störenden Geräusche in einem bestimmten Frequenzbereich ausfiltern, wobei diese Lösung deshalb bevorzugt wird, weil die Stabilität des Trägers dennoch gewährleistet werden kann. Es wird bei dieser Gelegenheit darauf hingewiesen, daß für diesen Gedanken der Geräuschdämpfung zwischen dem Antriebsmotor und dem Wischerlager selbständiger Schutz beansprucht wird, weil dieser Vorschlag auch bei den bekannten Anlagen mit einem die beiden Wischerlager verbindenden Rohr mit Vorteil eingesetzt werden kann.

Die Erfindung und deren vorteilhafte Ausgestaltungen werden nachstehend anhand der in der Zeichnung dargestellten Ausbildungsbeispiele näher erläutert. Es zeigen:
- Fig. 1: eine Seitenansicht auf den Tragrahmen einer Wischeranlage,
- Fig. 2: eine Ansicht in Pfeilrichtung P in Fig. 1,
- Fig. 3: in vergrößertem Maßstab eine Seitenansicht auf das Motortragteil,
- Fig. 4: eine Ansicht in Pfeilrichtung P in Fig. 3,
- Fig. 5: in vergrößertem Maßstab einen Schnitt durch einen rohrartigen Träger mit einem Wischerlager,
- Fig. 6: eine Ansicht in Pfeilrichtung P in Fig. 5,
- Fig. 7: einen Querschnitt entlang der Schnittlinie VII-VII in Fig. 6 in vergrößertem Maßstab,
- Fig. 8: eine Seitenansicht auf ein Motortragteil bei einem anderen Ausführungsbeispiel,
- Fig. 9: eine Ansicht in Pfeilrichtung P in Fig. 8,
- Fig.10: eine Seitenansicht auf ein Motortragteil eines dritten Ausführungsbeispieles,
- Fig.11: eine Ansicht in Pfeilrichtung P in Fig. 10,
- Fig.12: in vergrößertem Maßstab einen Teilschnitt durch einen rohrartigen Träger,
- Fig.13: einen Teilschnitt durch ein anderes Ausführungsbeispiel und
- Fig.14: einen Teilschnitt durch ein drittes Ausführungsbeispiel eines rohrartigen Trägers.

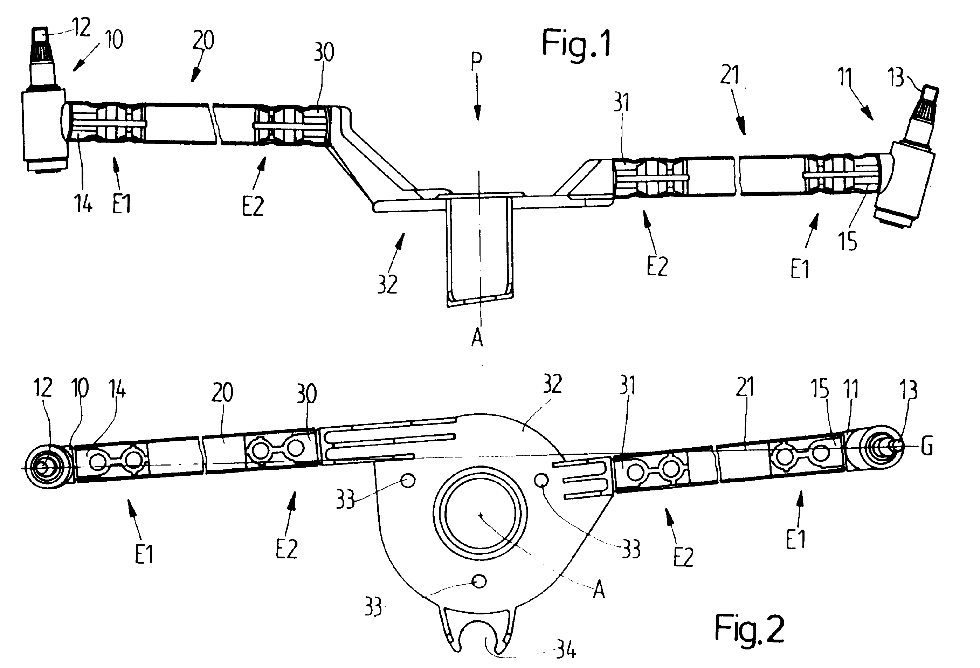

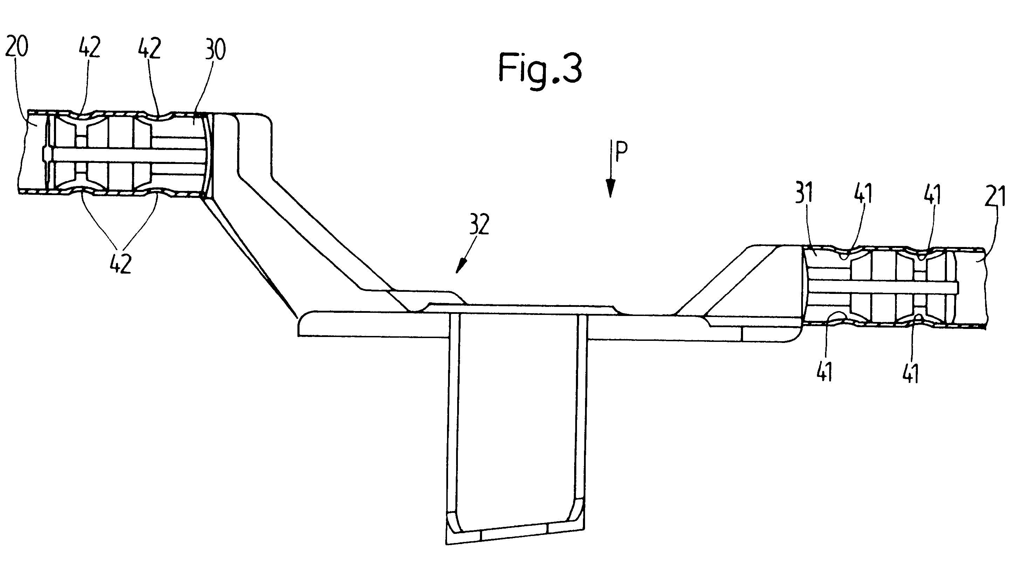

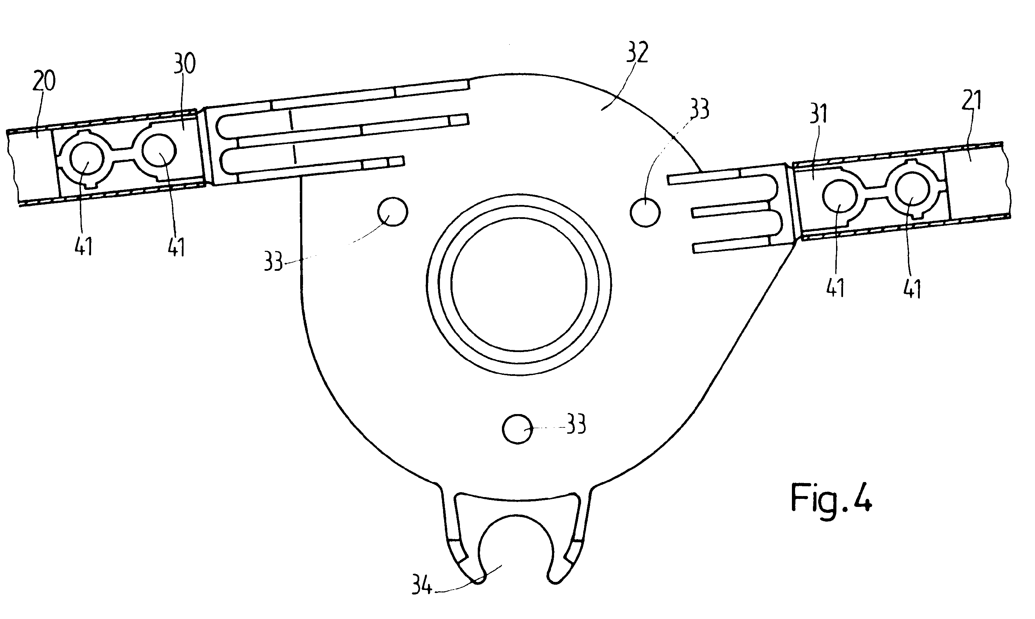

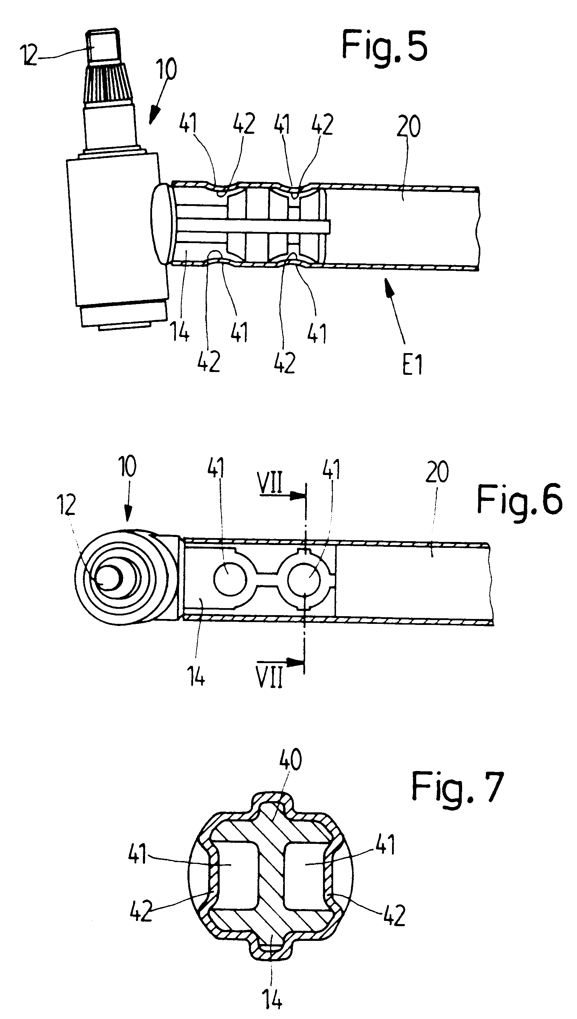

Von der Scheibenwischeranlage sind in den Fig. 1 bis 14 nur die für die vorliegende Erfindung wesentlichen Elemente dargestellt. Mit 10 und 11 sind zwei Wischerlager bezeichnet, in denen in bekannter Weise über Lagerbuchsen die Wischerwellen 12 und 13 drehbeweglich gelagert sind. Diese Wischerlager sind aus Zinkdruckguß gefertigt und haben einstückig jeweils einen Ansatz 14, 15, dessen Raumform später noch im Zusammenhang mit Fig. 5 bis 7 im einzelnen beschrieben wird. Zu der Wischeranlage gehören rohrartige Träger 20, 21 mit einem vorzugsweise kreisrunden Querschnitt. In das eine Ende E1 dieser rohrartigen Träger 20, 21 ist jeweils ein Ansatz 14, 15 eines Wischerlagers 10, 11 eingesteckt. In das andere Ende E2 dieser rohrartigen Träger 20, 21 sind Ansätze 30, 31 eines insgesamt mit 32 bezeichneten Motortragteils eingesteckt. Der Tragrahmen dieser Wischeranlage besteht also aus zwei rohrartigen Trägern 20, 21 und dem Motortragteil 32, das als Druckgußteil aus Aluminium oder Zink hergestellt ist. Die rohrartigen Träger 20, 21 sind formstabil an den Ansätzen am Wischerlager bzw. dem Motortragteil fixiert, was später noch beschrieben wird. Aus den Fig. 1 und 2 kann man entnehmen, daß diese rohrartigen Träger 20, 21 in unterschiedlichen Ebenen liegen, wobei der dazu notwendige Versatz durch das entsprechend geformte Motortragteil 32 ohne Schwierigkeiten realisierbar ist.

In Fig. 2 sind mit 33 Befestigungslöcher bezeichnet, an denen durch Verschraubung der eigentliche Antriebsmotor der Wischeranlage fixiert wird. Die Abtriebsachse des Antriebsmotors erstreckt sich dann längs der Linie A. In Fig. 2 ist eine Gerade G angedeutet, die die beiden Wischerlager 10, 11 miteinander verbindet. Man sieht, daß der Abstand zwischen dieser Abtriebsachse A dieses Motors und dieser Geraden G, welche die Wischerlager 10, 11 miteinander verbindet, verhältnismäßig klein ist, so daß keine große Phasenverschiebung zwischen den Wischbewegungen der beiden Wischer zu bemerken ist. Dies wird erreicht durch die in Fig. 2 erkennbare Anordnung der Ansätze 30, 31. Wichtig in diesem Zusammenhang ist, daß die Ansätze 30, 31 so ausgerichtet sind, daß man gerade rohrartige Träger 20, 21 verwenden kann. Dies hat den Vorteil, daß keine teuren Biegevorgänge erforderlich sind und daß darüber hinaus bei geraden rohrartigen Trägern die Stabilität der Verbindung allen Anforderungen gerecht wird.

Insbesondere in Fig. 2 wird erkennbar, daß an dem als Druckgußteil hergestellten Motortragteil 32 ein Befestigungsauge 34 angeformt ist, das allgemein als Befestigungselement angesehen werden kann und eine Befestigung dieses Motortragteils 32 an der nicht näher dargestellten Karosserie des Kraftfahrzeugs ermöglicht.

Die Ansätze 14, 15 am Wischerlager und die Ansätze 30, 31 am Motortragteil sind weitgehend identisch aufgebaut. Aus den Fig. 5, 6 und 7 geht hervor, daß jeder Ansatz beidseitig eines mittigen Steges 40 jeweils mehrere Ausnehmungen 41 aufweisen. In diese Ausnehmungen 41 sind Rohrabschnitte 42 des rohrartigen Trägers 20 eingedrückt, was insbesondere aus Fig. 7 deutlich erkennbar ist. In den Endbereichen E1, E2 wird also der rohrartige Träger 20, 21 so verformt, daß er sich abschnittsweise der hier nicht kreisrunden Kontur der Ansätze 14, 15 bzw. 30, 31 anpaßt. Auf diese Weise wird eine formschlüssige Verbindung zwischen den Ansätzen und den rohrartigen Trägern erreicht. Es wird in diesem Zusammenhang darauf hingewiesen, daß diese Art der formschlüssigen Verbindung durch Verformen eines Außenteils in Anpassung an die Kontur eines Innenteiles an sich bekannt ist und auch bei Wischeranlagen bereits verwendet wird, wie die DE-A-29 20 899 zeigt, auf die hier ausdrücklich verwiesen wird, so daß sich weitere Ausführungen hierzu erübrigen dürften.

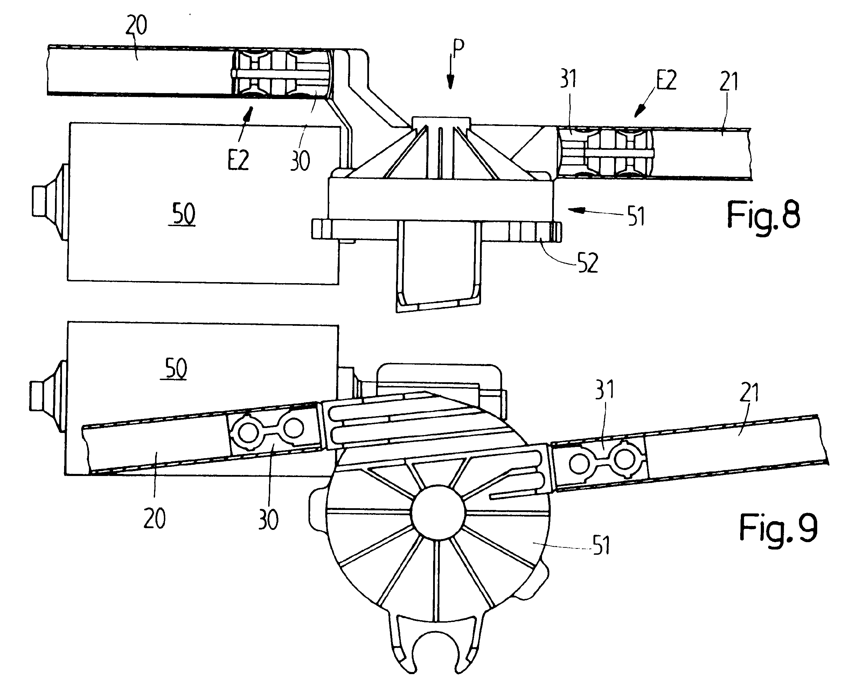

In den Fig. 8 bis 11 ist der Antriebsmotor 50 dargestellt, zu dem ein Getriebegehäuse 51 gehört, das durch einen Deckel 52 abgeschlossen ist. Wesentlich bei der Ausführung nach den Fig. 8 und 9 ist nun, daß an dieses Getriebegehäuse 51, das in bekannter Weise aus Zinkdruckguß hergestellt sein kann, zugleich einstückig die Ansätze 30, 31 angeformt sind, auf die die Enden E2 der rohrartigen Träger 20, 21 aufgesteckt werden. Bei diesen Ausführungen ist also gewissermaßen das Motortragteil einstückig mit einem Teil des Antriebsmotors 50, nämlich dem Getriebegehäuse 51 verbunden. Der Sachverhalt könnte auch so ausgedrückt werden, daß bei dieser Ausführung das Motortragteil - zumindest als separates Teil - entfällt und durch ein entsprechend gestaltetes Getriebegehäuse 51 des Antriebsmotors 50 ersetzt wird.

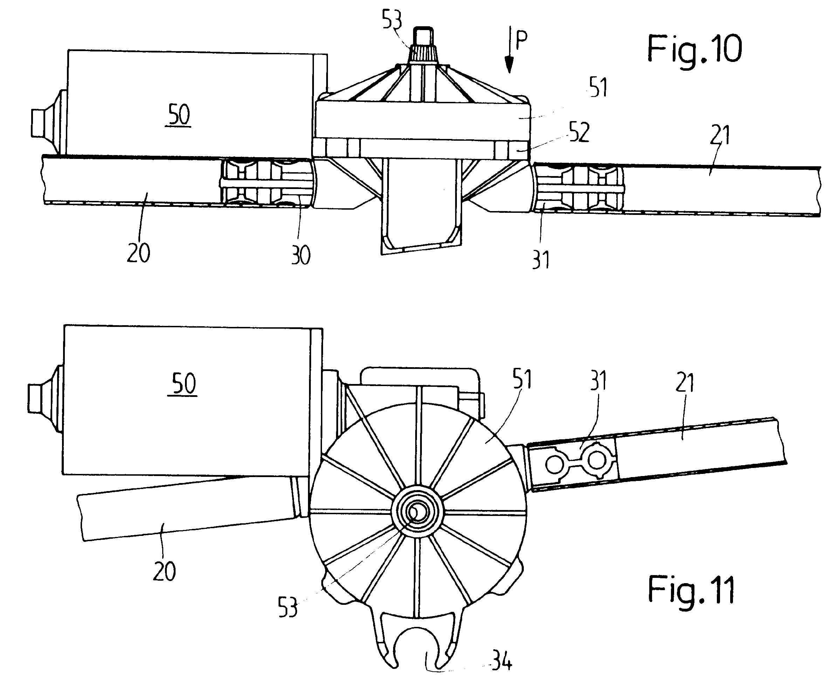

Die Ausführung nach den Fig. 10 und 11 unterscheidet sich von der Ausführung nach den Fig. 8 und 9 dadurch, daß nun diese Ansätze 30, 31 am Deckel 52 angeformt sind, der dann ebenfalls als Druckgußteil ausgebildet ist. Dieses Getriebegehäuse könnte auch aus zwei vorzugsweise gleichartig aufgebauten Getriebegehäusehälften zusammengesetzt sein, wobei dann jede Getriebegehäusehälfte derartige Ansätze aufweisen sollte, damit dieser Antriebsmotor möglichst universell für verschiedene Wischeranlagen eingesetzt werden kann. Bei einer solchen Ausführung aus zwei weitgehend identisch aufgebauten Getriebegehäusehälften kann auch die Lagerung der Abtriebswelle 53 des Antriebsmotors 50 verbessert werden, weil nun beidseitig des üblicherweise mit der Abtriebswelle verbundenen Schneckenrades eine Lagerung möglich ist.

Insgesamt wird zu den bisher beschriebenen Ausführungsformen nochmals zusammenfassend auf folgendes hingewiesen:

Der Tragrahmen für eine Wischeranlage mit zwei Wischerlagern besteht aus zwei rohrartigen Trägern und einem diese rohrartigen Träger verbindenden Zwischenstück in Form eines Motortragteils. Dieses Motortragteil ist als Druckgußteil ausgebildet und kann damit auf einfache Weise so ausgestaltet werden, daß anschließende Rohrstücke möglichst nicht abgebogen werden müssen. Durch die Verwendung gerader Rohre ist dieser Tragrahmen sehr verwindungssteif. Durch die Verwendung eines Druckgußteils als Zwischenstück zwischen den beiden geraden rohrartigen Trägern kann man kostengünstige Wischeranlagen schaffen, die auch bei komplizierten Einbausituationen ohne Schwierigkeiten montierbar sind. Dabei können die beiden Wischerwellen direkt von einer Motorkurbel aus angetrieben werden, wobei Phasenverschiebungen zwischen den beiden Wischbewegungen weitgehend vermieden werden können. Die Herstellkosten einer solchen Wischeranlage sind vergleichsweise gering. Die aus Zinkdruckguß hergestellten Wischerlager benötigen an der Befestigungsstelle mit dem rohrartigen Träger keine Nachbearbeitung. Die rohrartigen Träger müssen zunächst lediglich auf Länge abgeschnitten werden. Das Motortragteil wird als Druckgußteil ebenfalls unmittelbar in der gebrauchsfertigen Form gespritzt. Alle Teile werden durch einfaches Zusammenstecken miteinander verbunden, wobei dann anschließend vorzugsweise in einem einzigen Arbeitsgang die formschlüssigen Verbindungen durch spanlose Verformung der rohrartigen Träger hergestellt werden. Bei derartigen Wischeranlagen sind Änderungen vergleichsweise einfach durchführbar, weil in vielen Situationen nur die Länge der rohrförmigen Träger verändert werden muß. Durch Kombination von verschiedenen Wischerlagern mit verschiedenen rohrartigen Trägern und verschiedenen Motortragteilen kann ein Baukastensystem geschaffen werden, mit dem fast jede Einbausituation zu lösen ist, auch wenn mehr als zwei Wischerlager über einen Tragrahmen miteinander verbunden werden müssen.

Bei dem in der Zeichnung dargestellten Ausführungsbeispiel wird ein rohrförmiger Träger mit einem runden Querschnitt verwendet, weil dann die Lage des Wischerlagers durch Verdrehung variiert werden kann. Bei anderen Ausführungen könnten aber auch Vierkantrohre als Träger verwendet werden.

In den Zeichnungen sind nur Ausführungsbeispiele dargestellt, bei denen zwei Wischerlager über zwei rohrartige Träger an einem gemeinsamen Motortragteil formstabil fixiert sind. Der Grundgedanke der Erfindung kann aber ebensogut auch bei Wischeranlagen realisiert werden, die nur ein Wischerlager aufweisen, das über einen rohrartigen Träger an einem mit einem entsprechenden Ansatz ausgerüsteten Motortragteil befestigt ist. In der Zeichnung sind nur Ausführungsformen dargestellt, bei denen die Verbindung zwischen dem rohrartigen Träger und den Ansätzen am Wischerlager bzw. am Motortragteil durch spanlose Verformung des rohrartigen Trägers erreicht wird. Eine formstabile Verbindung zwischen dem rohrartigen Träger und dem Ansatz am Motortragteil kann aber auch durch ein Vernieten oder eine Verschraubung erreicht werden und die Erfindung ist nicht auf das in der Zeichnung dargestellte Ausführungsbeispiel, das die derzeit beste Alternative zeigt, eingeschränkt. Der Grundgedanke der Erfindung kann unter Verwendung eines separaten Motortragteils verwirklicht werden, doch werden Ausführungen bevorzugt, bei der dieses Motortragteil als separates Teil entfällt und die Ansätze zur formstabilen Fixierung der rohrartigen Träger unmittelbar an ein Bauteil des Getriebegehäuses des Antriebsmotors angeformt werden. Das Getriebegehäuse übernimmt bei einer solchen Ausführung also eine tragende Funktion des Rahmens. Da dieses Getriebegehäuse aus Zinkdruckguß hergestellt wird, kann man ohne Zusatzaufwand ein Befestigungselement, beispielsweise ein Befestigungsauge, anformen, so daß zur Fixierung der gesamten Wischeranlage an der Karosserie keine zusätzlichen Bauteile benötigt werden.

Insgesamt ist damit eine Wischeranlage geschaffen, die allen Anforderungen hinsichtlich der Stabilität genügt, die aber dennoch kostengünstig aus wenig Einzelteilen hergestellt werden kann.

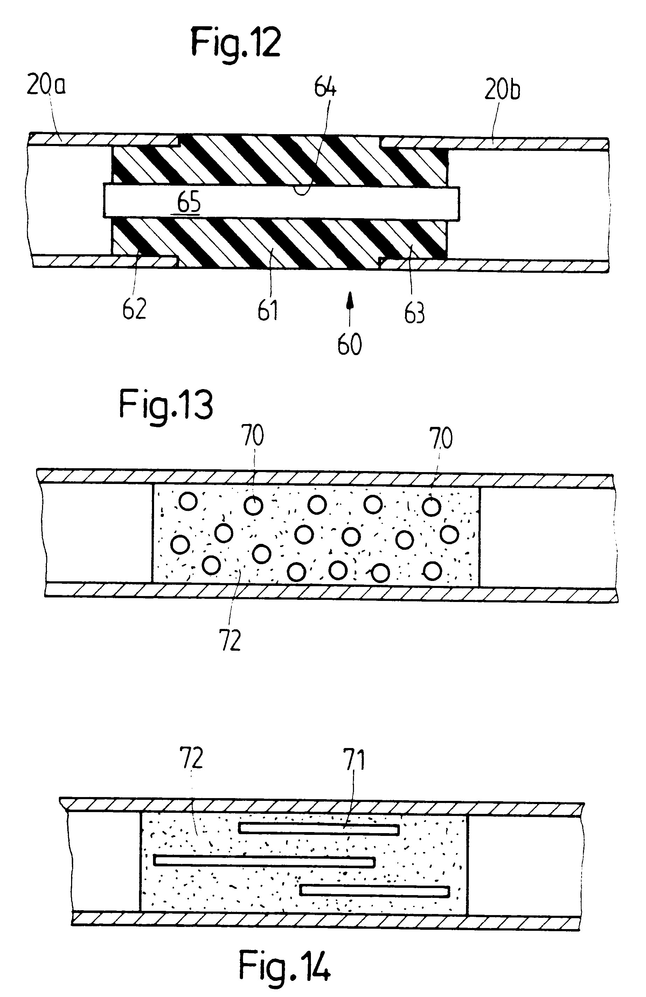

In den Fig. 12 bis 14 sind nun Möglichkeiten zur Dämpfung der vom Motor über den Rahmen auf die Wischerlager und dann auf die Karosserie des Kraftfahrzeugs übertragenen Geräusche angedeutet. In Fig. 12 erkennt man zwei Teile 20a, 20b eines rohrartigen Trägers 20, die über ein Zwischenstück 60 miteinander verbunden sind. Dieses Zwischenstück 60 ist aus einem geräuschdämpfenden, frequenzfilternden oder geräuschabsorbierenden Material, beispielsweise aus Kunststoff, hergestellt. Es besteht aus einem Distanzhalter 61, von dem beidseitig Ansätze 62, 63 ausgehen, die in die rohrartigen Träger 20a, 20b eingepreßt sind. Zur Versteifung des Systems können der Distanzhalter 61 und die seitlich Ansätze 62, 63 eine durchgehende Bohrung 64 zum Einsatz eines Verstärkungsstiftes 65 aufweisen. Bei dieser Ausführung wird also durch die Zweiteilung des rohrförmigen Trägers 20 und die Zwischenschaltung eines Zwischenstückes 60, das als geräuschdämpfendes Element dient, eine Geräuschübertragung wesentlich reduziert. In Fig. 13 und 14 sind Alternativen dargestellt, wobei hier gewissermaßen das Geräuschdämpfungselement 60 durch eine Perforierung des rohrförmigen Trägers 20 erreicht wird. Fig. 13 zeigt eine Ausführung, bei der dieser rohrartige Träger 20 in einem gewissen Bereich runde Durchbrüche 70 aufweist. Bei der Ausführung nach Fig. 14 sind längliche Durchbrüche 71 vorgesehen. Im Bereich dieser Perforierung 70, 71 ist der rohrartige Träger 20 mit einem geräuschabsorbierenden Material 72 ausgefüllt, bespielsweise ausgeschäumt. Durch diese Maßnahme können entstehende Resonanzfrequenzen weitestgehend ausgefiltert und damit auch gedämpft werden, so daß sie nicht an die Karosserie übertragen werden. Selbstverständlich muß bei all diesen geräuschdämpfenden Maßnahmen darauf geachtet werden, daß die Stabilität des Tragrahmens dadurch nicht unzulässig herabgesetzt wird.

## Patentansprüche

1. Wischeranlage für Kraftfahrzeuge mit wenigstens einem Wischerlager (10), das an dem einen Ende (E1) eines rohrartigen Trägers (20) fixiert ist, der formstabil mit einem Motortragteil (32) für den Antriebsmotor verbunden ist,
dadurch gekennzeichnet,
daß das andere Ende (E2) des rohrartigen Trägers (20) auf einen an Motortragteil (32) ausgebildeten Ansatz (30) aufgesteckt und mit diesem formschlüssig verbunden ist.

2. Wischeranlage nach Anspruch 1, dadurch gekennzeichnet, daß das Motortragteil (32) einen zweiten Ansatz (31) aufweist, auf den ein zweiter rohrartiger Träger (21) für ein zweites Wischerlager (11) aufgesteckt ist.

3. Wischeranlage nach Anspruch 2, dadurch gekennzeichnet, daß die Ansätze (30,31) am Motortragteil (32) derart angeordnet und ausgerichtet sind, daß die Wischerlager (10,11) über gerade rohrartige Träger (20,21) an diesem einen Motortragteil (32) gehalten sind.

4. Wischeranlage nach einem der vorhergehenden Ansprüche, dadurch gekennzeichnet, daß das Motortragteil (32) als Druckgußteil insbesondere aus Aluminium oder Zink hergestellt ist.

5. Wischeranlage nach Anspruch 4, dadurch gekennzeichnet, daß die Ansätze (30,31) am Motortragteil (32) derart angeordnet und ausgerichtet sind, daß der Abstand zwischen der Abtriebsachse (A) des Antriebsmotors und einer die Wischerlager (10,11) verbindenden Geraden (G) möglichst klein ist.

6. Wischeranlage nach Anspruch 4 oder 5, dadurch gekennzeichnet, daß das Motortragteil (32) ein Befestigungselement (34) zur Befestigung an der Karosserie des Kraftfahrzeuges aufweist.

7. Wischeranlage nach einem der vorhergehenden Ansprüche, dadurch gekennzeichnet, daß jeder Ansatz (30,31) wenigstens eine Ausnehmung (41) aufweist, in die zur formschlüssigen Verbindung ein Rohrabschnitt (20,21) eingedrückt ist.

8. Wischeranlage nach Anspruch 7, dadurch gekennzeichnet, daß auch jedes Wischerlager (10,11) einen Ansatz (14,15) aufweist, der in dem zugeordneten rohrartigen Träger (20,21) steckt, und daß die Verbindungsart zwischen einem Wischerlageransatz (14,15) und dem rohrartigen Träger (20,21) der Verbindungsart zwischen dem rohrartigen Träger (20,21) und dem Motortragteil (32) entspricht.

9. Wischeranlage nach einem der vorhergehenden Ansprüche, dadurch gekennzeichnet, daß das Motortragteil (32) einstückig mit einem Teil des Antriebsmotors (50) ausgebildet ist.

10. Wischeranlage nach Anspruch 9, dadurch gekennzeichnet, daß der Antriebsmotor (50) ein mit einem Deckel (52) abgeschlossenes Getriebegehäuse (51) aufweist und daß das mit einem Ansatz (30,31) in einen rohrförmigen Träger (20,21) eingesteckte Motortragteil (32) einstückig mit dem Getriebegehäuse (51) ausgebildet ist.

11. Wischeranlage nach Anspruch 9, dadurch gekennzeichnet, daß der Antriebsmotor (50) ein mit einem Deckel (52) abgeschlossenes Getriebegehäuse (51) aufweist, daß der Deckel (52) als Druckgußteil ausgebildet ist und daß das mit einem Ansatz (30,31) in einen rohrförmigen Träger (20,21) eingesteckte Motortragteil (32) einstückig mit dem Deckel (52) ausgebildet ist.

12. Wischeranlage nach Anspruch 9, dadurch gekennzeichnet, daß der Antriebsmotor ein Getriebegehäuse mit zwei vorzugsweise gleichartig aufgebauten Getriebegehäusehälften aufweist und daß das mit einem Ansatz in einen rohrförmigen Träger eingesteckte Motortragteil einstückig mit einer Getriebegehäusehälfte ausgebildet ist.

13. Wischeranlage nach Anspruch 12, dadurch gekennzeichnet, daß beide Getriebegehäusehälften Ansätze zum Aufstecken der rohrförmigen Träger aufweisen.

14. Wischeranlage insbesondere nach wenigstens einem der vorhergehenden Ansprüche, dadurch gekennzeichnet, daß zwischen dem Antriebsmotor und dem Wischerlager ein Geräuschdämpfungselement (60) vorgesehen ist.

15. Wischeranlage nach Anspruch 14, dadurch gekennzeichnet, daß der rohrförmige Träger (20,21) ein Geräuschdämpfungselement (60) aufweist.

16. Wischeranlage nach Anspruch 15, dadurch gekennzeichnet, daß der rohrförmige Träger (20) zweigeteilt ist und die beiden Trägerabschnitte (20a,20b) über ein geräuschdämpfendes Element (60) miteinander verbunden sind.

17. Wischeranlage nach Anspruch 15 oder 16, dadurch gekennzeichnet, daß der rohrförmige Träger (20,21) Bereiche mit Perforierungen (70,71) aufweist.

18. Wischeranlage nach Anspruch 16, 16 oder 17, dadurch gekennzeichnet, daß der rohrförmige Träger (20,21) abschnittsweise mit geräuschdämpfendem Material (72) ausgefüllt ist.

## Claims

1. A wiper system for motor vehicles with at least one pivot-shaft (10) assembly fixed to the one end (10) of a pipe-like carrier (20), which is connected to a motor carrier member (32) for the drive motor stable in form, wherein the other end (E2) of the pipe-like carrier (20) is plugged onto a stud (30) formed onto the motor carrier member (32) and is form-fittingly connected with said stud 30.

2. A wiper system according to claim 1, wherein the motor carrier member (32) comprises a second stud (31) onto which a second pipe-like carrier (21) for a second pivot-shaft assembly (11) is plugged.

3. A wiper system according to claim 2, wherein the studs (30, 31) are located and arranged on the motor carrier member (32) in such a way that the pivot-shaft assemblies (10, 11) are held on this one motor carrier member (32) via straight pipe-like carriers (20, 21).

4. A wiper system according to one of the preceding claims, wherein the motor carrier member (32) is manufactured as a die-casting member especially of aluminium or of zinc.

5. A wiper system according to claim 4, wherein the studs (30, 31) on the motor carrier member (32) are located and arranged in such a way that the distance between the driven axis (A) of the drive motor and a straight line (G) connecting the pivot-shaft assemblies (10, 11) is as small as possible.

6. A wiper system according to claim 4 or 5, wherein the motor carrier member (32) comprises a fastening element (34) for fixing onto the car body of the motor vehicle.

7. A wiper system according to one of the preceding claims, wherein each stud (30, 31) comprises at least one recess (41), into which a pipe portion (20, 21) is pressed for the purpose of a form-fitting connection.

8. A wiper system according to claim 7, wherein each pivot-shaft assembly (10, 11), too, comprises a stud (14, 15) plugged into the respective pipe-like carrier (20, 21) and wherein the way a stud of a pivot-shaft assembly (14, 15) and the pipe-like carrier (20, 21) are connected to each other corresponds the way the pipe-like carrier (20, 21) and the motor carrier member (32) are connected to each other.

9. A wiper system according to one of the preceding claims, wherein the motor carrier member (32) is integrally formed with a part of the drive motor (50).

10. A wiper system according to claim 9, wherein the drive motor (50) comprises a gear housing (51) closed by a lid (52) and wherein the motor carrier member (32) plugged into a pipe-like carrier (20, 21) by way of a stud (30, 31) is integrally formed with the gear housing (51).

11. A wiper system according to claim 9, wherein the drive motor (50) comprises a gear housing (51) closed by a lid (52), wherein the lid (52) is formed as a die-casting member and wherein the motor carrier member (32) plugged into a pipe-like carrier (20, 21) by way of a stud (30, 31) is integrally formed with the lid (52).

12. A wiper system according to claim 9, wherein the drive motor comprises a gear housing with two halfs of the gear housing preferably constructed in the same way and wherein the motor carrier member plugged into a pipe-like carrier by way of a stud is integrally formed with one half of the gear housing.

13. A wiper system according to claim 12, wherein both halfs of the gear housing comprise studs for plugging the pipe-like carrier onto them.

14. A wiper system especially according to one of the preceding claims, wherein a noise dampening element (60) is provided between the drive motor and the pivot-shaft assembly.

15. A wiper system according to claim 14, wherein the pipe-like carrier (20, 21) comprises a noise dampening element (60).

16. A wiper system according to claim 15, wherein the pipe-like carrier (20) is divided into two parts and the two carrier parts (20a, 20b) are connected to each other via a noise dampening element (60).

17. A wiper system according to claim 15 or 16, wherein the pipe-like carrier (20, 21) comprises perforated portions (70, 71).

18. A wiper system according to claim 15, 16 or 17, wherein the pipe-like carrier (20, 21) in sections is filled with noise dampening material (72).

## Revendications

1. Système d'essuie-glace pour automobile , comprenant au moins un palier (10) d'essuie-glace, fixé sur l'une (E1) des extrémités d'une poutrelle tubulaire (20) reliée de façon rigide à une pièce support (32) de moteur prévue pour le moteur d'entraînement,
caractérisé en ce que l'autre extrémité (E2) de la poutrelle tubulaire (20) est emboîtée sur un appendice (30) formé sur la pièce support (32) du moteur, et est reliée à cet appendice par coopération de formes.

2. Système d'essuie-glace selon la revendication 1, caractérisé en ce que la pièce support (32) du moteur comporte un deuxième appendice (31), sur lequel est emboîtée une deuxième poutrelle tubulaire (21) prévue pour un deuxième palier (11) d'essuie-glace.

3. Système d'essuie-glace selon la revendication 2, caractérisé en ce que les appendices (30, 31) sont disposés sur la pièce support (32) du moteur et sont orientés de manière telle que les paliers (10, 11) d'essuie-glace soient maintenus sur cette pièce support (32) du moteur par l'intermédiaire de poutrelles tubulaires droites (20, 21).

4. Système d'essuie-glace selon l'une des revendications précédentes, caractérisé en ce que la pièce support (32) du moteur est réalisée sous forme d'une pièce moulée sous pression, notamment en aluminium ou en zinc.

5. Système d'essuie-glace selon la revendication 4, caractérisé en ce que les appendices (30, 31) formés sur la pièce support (32) du moteur sont disposés et orientés de manière telle que la distance entre l'arbre (A) d'entraînement du moteur d'entraînement et une droite (G) reliant les paliers (10, 11 ) d'essuie-glace soit la plus petite possible.

6. Système d'essuie-glace selon l'une des revendications 4 ou 5, caractérisé en ce que la pièce support (32) du moteur comporte un élément (34) de fixation destiné à être fixé sur la caisse de l'automobile.

7. Système d'essuie-glace selon l'une des revendications précédentes, caractérisé en ce que chaque appendice (30, 31) comporte au moins un évidement (41), dans lequel on force une section du tube (20, 21), en vue d'obtenir une liaison par coopération de formes.

8. Système d'essuie-glace selon la revendication 7, caractérisé en ce que chacun des paliers (10, 11) d'essuie-glace comporte également un appendice (14, 15) emboîté dans la poutrelle tubulaire associée (20, 21), et en ce que le type de liaison existant entre un appendice (14, 15) de palier d'essuie-glace et la poutrelle tubulaire (20, 21) correspond au type de liaison existant entre la poutrelle tubulaire (20, 21) et la pièce support (32) du moteur.

9. Système d'essuie-glace selon l'une des revendications précédentes, caractérisé en ce que la pièce support (32) du moteur est réalisée d'un seul tenant avec une partie du moteur (50) d'entraînement.

10. Système d'essuie-glace selon la revendication 9, caractérisé en ce que le moteur (50) d'entraînement comporte un carter (51) de transmission fermé par un couvercle (52), et en ce que la pièce support (32) du moteur, dont un appendice (30, 31) est emboîté dans une poutrelle tubulaire (20, 21), est réalisée d'un seul tenant avec le carter (51) de transmission.

11. Système d'essuie-glace selon la revendication 9, caractérisé en ce que le moteur (50) d'entraînement comporte un carter (51) de transmission fermé par un couvercle (52), et en ce que le couvercle (52) est réalisé sous forme d'une pièce moulée sous pression, et en ce que la pièce support (32) du moteur, dont un appendice (30, 31) est emboîté dans une poutrelle tubulaire (20, 21), est réalisée d'un seul tenant avec le couvercle (52).

12. Système d'essuie-glace selon la revendication 9, caractérisé en ce que le moteur d'entraînement comporte un carter de transmission comprenant deux demi-carters conçus de préférence de façon identique, et en ce que la pièce support du moteur, dont un appendice est emboîté dans une poutrelle tubulaire, est réalisée d'un seul tenant avec l'un des demi-carters.

13. Système d'essuie-glace selon la revendication 12, caractérisé en ce que les deux demi-carters comportent des appendices permettant l'emboîtement des poutrelles tubulaires.

14. Système d'essuie-glace notamment selon l'une au moins des revendications précédentes, caractérisé en ce qu'un élément insonorisant (60) est prévu entre le moteur d'entraînement et le palier d'essuie-glaces.

15. Système d'essuie-glace selon la revendication 14, caractérisé en ce que la poutrelle tubulaire (20, 21) comporte un élément insonorisant (60).

16. Système d'essuie-glace selon la revendication 15, caractérisé en ce que la poutrelle tubulaire (20) est divisée en deux parties, et en ce que les deux sections (20a, 20b) de la poutrelle sont reliées l'une à l'autre par l'intermédiaire d'un élément insonorisant (60).

17. Système d'essuie-glace selon l'une des revendications 15 ou 16, caractérisé en ce que la poutrelle tubulaire (20, 21) comporte des zones pourvues de perforations (70, 71).

18. Système d'essuie-glace selon l'une des revendications 15, 16 ou 17, caractérisé en ce que certaines zones de la poutrelle tubulaire (20, 21) sont remplies de matière insonorisante (72).
